# EUROPEAN PATENT APPLICATION

(11) **EP 4 529 775 A1**
(43) Date of publication of application: **02.04.2025**
(21) Application number: 23200940.7
(22) Date of filing: 29.09.2023
(51) Int. Cl.: A23K 20/147, A23K 20/163, A23K 50/42

(54) **METHOD FOR IMPROVING MEMORY CONSOLIDATION IN CANINE**

(71) Applicant: Mars, Incorporated, McLean, VA 22101 (US)
(72) Inventor: MOESTA, Alexandra, 30470 AIMARGUES (FR); GOSLING, Matthew Peter, Batley, WF17 9LU (GB)
(74) Representative: Cabinet Nony

(57) **Abstract**

The present disclosure relates to to the field of food products and compositions, such as food additives and supplements, and uses thereof. Those food products and compositions are particularly convenient for canine, especially dogs, for use for improving cognition.

## Description

### FIELD OF THE DISCLOSURE

Various embodiments of the disclosure relate to the field of food products and compositions, such as food additives and supplements, and uses thereof. Those food products and compositions are particularly convenient for canine, especially dogs, for use for improving cognition. More particularly, the present disclosure relates to food products and compositions which are convenient for canine, especially dogs, for improving cognition, in particular post-training memory consolidation, for example at an early age and at an advanced age.

### BACKGROUND OF THE DISCLOSURE

As it is known in the art, neurocognitive development in growing canine can be influenced by genetic predisposition, environment, disease, and nutrition.

Edible animal chews can provide mental stimulation through occupation for domestic animals. Additionally, certain edible animal chews can provide health benefits for domestic animals, such has improved oral health.

However nutritional intervention for neurocognitive development and maintenance, specifically learning, memory and motor function tasks, in canine, especially dogs, have long been under-evaluated, compared with nutritional interventions for humans.

So far, there has also been little to no evidence of the effect of post-training activity in dogs.

This is a major concern, as costs of training are believed to be a major contributor to the expense of working dogs; not counting the high number of fails in such programs.

There remains a need for methods for improving memory consolidation in canine animals. In particular, there remains a need for methods for improving memory consolidation in canine; including young, mature and aged canine.

The disclosure has for purpose to meet the above-mentioned needs.

### SUMMARY OF THE DISCLOSURE

The purpose and advantages of the disclosed subject matter will be set forth in and are apparent from the description that follows, as well as will be learned by practice of the disclosed subject matter. Additional advantages of the disclosed subject matter will be realized and attained by the devices particularly pointed out in the written description and claims hereof, as well as from the appended drawings.

The present disclosure relates to a non-therapeutic method for improving memory consolidation in a canine, including the step of administering an edible animal chew to the canine; said edible animal chew being **characterized** by a long-lasting duration time of at least about 6 minutes; preferably at least about 8 minutes, most preferably at least about 10 minutes, and still more preferably at least about 14 minutes.

In some embodiments, the present disclosure relates to a non-therapeutic method for improving memory consolidation in a canine, including the step of administering an edible animal chew to the canine; said edible animal chew being **characterized** by a tensile toughness of at least about 20 Mpa; preferably of at least about 50 MPa, most preferably of at least about 80 Mpa.

In some embodiments, the present disclosure relates to a non-therapeutic method for improving memory consolidation in a canine, including the step of administering an edible animal chew to the canine; said edible animal chew being **characterized** in that it can include:
- a protein content of at least about 3 wt %; **and/or**
- a starch content of at least about 10 wt %; **and/or**
- a fat content of less than about 20 wt %; **and/or**
- a water content of less than about 40 wt %.

The present disclosure also relates to an edible animal chew, for use in a method for improving memory consolidation in a canine; said edible animal chew being **characterized** by a long-lasting duration time of at least about 6 minutes; preferably at least about 8 minutes, and more preferably at least about 10 minutes, and still more preferably at least about 14 minutes.

### DESCRIPTION OF THE FIGURES

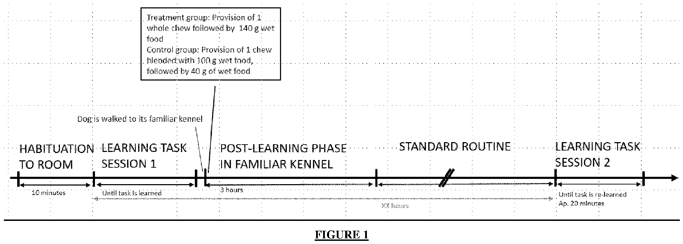

**Figure 1****:** Overview over testing protocol. On day 1, dogs were tested in a learning task, until they reached a pre-defined learning criterion. They then either received a long-lasting chew whole, or turned into a paste. The next day, dogs were tested in the same learning task again.
**Figure 2****:** Number of sessions needed to reach learning criterion in the 2 groups on day 1 and day 2 (For each day, the left column corresponds to the control group. The right column corresponds to the experimental group.
**Figure 3****:** Effect of length of the oral activity (chewing duration) on performance (number of sessions needed to reach learning criterion on day 2.

### DETAILED DESCRIPTION OF THE DISCLOSURE

Surprisingly, it has been found that post-learning chewing can have a positive impact on memory consolidation in canine. Chewing before and during tasks has been shown to improve attention, performance and reduce stress in rodents or humans in some, but not all studies, this effect had never been tested or even suggested on dogs. The effect of chewing post-learning on memory consolidation has not yet been investigated in any species and more particularly not in dogs.

To that effect, it has been shown that a long-lasting duration time of at least 6 minutes, for the edible animal chew, can led to statistically significant improvement.

Thus, the present disclosure relates to a non-therapeutic method for improving memory consolidation in a canine, including the step of administering an edible animal chew to the canine; said edible animal chew being **characterized** by a long-lasting duration time of at least about 6 minutes; preferably at least about 8 minutes, most preferably at least about 10 minutes, and still most preferably at least about 14 minutes.

Without wishing to be bound by the theory, it is proposed that this long-lasting duration time can be particularly met with edible animal chews characterized by a tensile toughness of at least about 20 Mpa.

According to an embodiment, the present disclosure relates to a non-therapeutic method for improving memory consolidation in a canine, including the step of administering an edible animal chew to the canine; said edible animal chew being **characterized** by a tensile toughness of at least about 20 MPa; preferably of at least about 50 MPa, most preferably of at least about 80 MPa.

Determination of tensile toughness of an edible animal chew can, for example, be determined according to the protocol as defined in WO2020/035677 and WO2021/161017 (incorporated herein by reference), and as further described in the « definition » part.

According to an embodiment, the method for improving memory consolidation in a canine is characterized in that the edible animal chew can include at least about 10 wt %; preferably at least about 20 wt %, most preferably at least about 50 wt % of starch.

According to an embodiment, the method for improving memory consolidation in a canine is characterized in that the edible animal chew can include at least about 3 wt % of protein.

According to an embodiment, the method for improving memory consolidation in a canine is characterized in that the edible animal chew can include from about 3 wt % to about 85 wt % of protein. In some embodiments, the protein source can comprise collagen. In some embodiments, the protein source can consist of collagen, meaning that collagen can be the sole source of protein.

According to an embodiment, the method for improving memory consolidation in a canine is characterized in that the edible animal chew can include protein wherein from about 3 wt % to about 85 wt % of the protein collagen.

According to an embodiment, the method for improving memory consolidation in a canine is characterized in that:
- the edible animal chew can include from about 3 wt % to about 85 wt % of protein; and
- from about 3 wt % to about 85 wt % of the protein is collagen.

According to an embodiment, the method for improving memory consolidation in a canine is characterized in that the edible animal chew can include:
- at least about 3 wt % of protein; **and/or**
- at least about 10 wt % of starch; **and/or**
- less than about 20 wt % of fat; **and/or**
- less than about 40 wt % of water.

According to an embodiment, the method for improving memory consolidation in a canine is characterized in that the edible animal chew can include:
- at least about 3 wt % of protein; **and**
- less than about 20 wt % of fat; **and**
- less than about 40 wt % of water.

According to an embodiment, the method for improving memory consolidation in a canine is characterized in that the edible animal chew can include:
- at least about 10 wt % of starch; **and**
- less than about 20 wt % of fat; **and**
- less than about 40 wt % of water.

According to an embodiment, the method for improving memory consolidation in a canine is characterized in that the edible animal chew can include:
- at least about 3 wt % of protein; **and**
- less than about 40 wt % of water.

According to an embodiment, the method for improving memory consolidation in a canine is characterized in that the edible animal chew can include:
- less than about 20 wt % of fat; **and**
- less than about 40 wt % of water.

According to an embodiment, the method for improving memory consolidation in a canine is characterized in that the edible animal chew can include:
- at least about 10 wt % of starch; **and**
- less than about 40 wt % of water.

According to an embodiment, the method for improving memory consolidation in a canine is characterized in that the edible animal chew can include less than about 20 wt %; preferably less than about 10 wt % of animal fat.

According to an embodiment, the method for improving memory consolidation in a canine is characterized in that the edible animal chew can include less than about 40 wt %, preferably less than about 25 wt %, of water. In some embodiments, the edible animal chew can consist of a dry composition, which can include less than about 25 wt % of water; for example less than about 20 wt % of water.

According to an embodiment, the method for improving memory consolidation in a canine is characterized in that the edible animal chew can be an aerated chew; preferably, the aerated edible chew can further be characterized by a density ranging from about 0.4 g/cm³ to about 1.2 g/cm³.

The edible animal chew can have an internal cellular structure. The edible animal chew can be in the form of a solid foam. The internal cellular structure can be in the form of pores, which can be open or closed pores, which can have been formed, for example, by the expansion of gases within and/or the passage of gases through the edible animal chew during formation and before solidification, e.g. while being formed by extrusion. The gases can be selected from steam, air, nitrogen and a supercritical fluid, which can be selected from nitrogen and carbon dioxide. The edible animal chew can be a thermally expanded edible animal chew or an aerated animal chew.

According to some embodiments, the method for improving memory consolidation in a canine is characterized in that the edible animal chew can have an elongated shape.

According to some embodiments, the edible animal chews of the present disclosure can be nutritionally complete.

According to some embodiments, the method for improving memory is characterized in that the canine is a dog; in particular a domestic dog.

According to some embodiments, the method for improving memory is characterized in that the canine is an early stage canine; in particular an early stage dog, such as a puppy.

According to some embodiments, the method for improving memory is characterized in that the canine is an advanced stage canine; in particular an advanced stage dog.

The methods of the disclosure are particularly suitable for improving, post-training, the memory consolidation in a canine.

Hence, according to some embodiments, the method can include the following steps:
a) submitting the canine, in particular the domestic dog, to a training session; and then
b) administering the edible animal chew to the canine.

In some embodiments, the training sessions can be selected from, without limitation: Stand, Sit, Lay, Walk, Trot, Run, Find an object, Bring an object, Heel, Walk around an object, Walk towards an object; for example as detailed in the Examples.

According to some embodiments, the edible animal chew can be administered to the canine from about 2 minutes to about 180 minutes after the end of the training session; for example from about 2, 5, 10, 15, 20, 30, 40, 50, 60, 70, 80, 90, 100, 110, 120, 130, 140, 150, 160, 170 to 180 minutes after the end of the training session.

The present disclosure may further relate to therapeutic applications.

Accordingly, the present disclosure may further relate to an edible animal chew, as previously disclosed, for use in a method for improving memory consolidation in a canine; said edible animal chew being **characterized** by a long-lasting duration time of at least about 6 minutes; preferably at least about 8 minutes, and more preferably at least about 10 minutes and still more preferably at least about 14 minutes.

Hence, according to some embodiments, the edible animal chew may also be further characterized by a tensile toughness of at least about 20 Mpa; preferably at least about 50 MPa, most preferably at least about 80 MPa.

According to some embodiments, the edible animal chew may also be further characterized as an aerated chew; preferably with a density from about 0.4 g/cm³ to about 1.2 g/cm³.

According to some embodiments, the edible animal chew is being **characterized** in that it can include:
- at least about 3 wt % of protein; **and/or**
- at least about 10 wt % of starch; **and/or**
- less than about 20 wt % of fat; **and/or**
- less than about 40 wt % of water.

Unless stated otherwise, the edible animal chew according to the present disclosure can be adapted for an application to, both, therapeutic and non-therapeutic uses.

### Definitions

The terms used in this specification generally have their ordinary meanings in the art, within the context of this subject matter and in the specific context where each term is used. Certain terms are defined below to provide additional guidance in describing the compositions and methods of the disclosed subject matter and how to make and use them.

As used herein, the singular forms **"a", "an",** and **"the"** include plural referents unless the context clearly dictates otherwise. Thus, for example, reference to "a compound" includes mixtures of compounds.

As used herein, the terms **"include", "including", "comprises", "comprising"** or any other variation thereof, are intended to cover a non-exclusive inclusion, such that a process, method, article, or apparatus that includes a list of elements does not include only those elements but can include other elements not expressly listed or inherent to such process, method, article, or apparatus.

The term **"about"** or **"approximately"** means within an acceptable error range for the particular value as determined by one of ordinary skill in the art, which will depend in part on how the value is measured or determined, *i.e.,* the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

Moreover, the terms **"at least",** and **"ranging from",** encompass the hereafter cited value. Unless specifically stated otherwise, amounts (in particular weight percentages) are expressed herein by weight of a product or composition reference. In the present disclosure, ranges are stated in shorthand, so as to avoid having to set out at length and describe each and every value within the range. Any appropriate value within the range can be selected, where appropriate, as the upper value, lower value, or the terminus of the range. For example, a range from 1 to 10 represents the terminal values of 1 and 10, as well as the intermediate values of 2, 3, 4, 5, 6, 7, 8, 9, and all intermediate ranges encompassed within 1-10, such as 2 to 5, 2 to 8, 7 to 10, etc.

As used herein, the term **"canine"** or **"canine animal"** encompasses animals, including pet animals selected in the group including recognized dog breeds (some of which are further subdivided), which can include afghan hound, airedale, akita, Alaskan malamute, basset hound, beagle, Belgian shepherd, bloodhound, border collie, border terrier, borzoi, boxer, bulldog, bull terrier, cairn terrier, chihuahua, chow, cocker spaniel, collie, corgi, dachshund, dalmatian, doberman, English setter, fox terrier, German shepherd, golden retriever, great dane, greyhound, griffon bruxellois, Irish setter, Irish wolfhound, King Charles spaniel, Labrador retriever, lhasa apso, mastiff, newfoundland, old English sheepdog, papillion, pekingese, pointer, pomeranian, poodle, pug, rottweiler, St. Bernard, saluki, samoyed, schnauzer, Scottish terrier, Shetland sheepdog, shih tzu, Siberian husky, Skye terrier, springer spaniel, West Highland terrier, whippet, Yorkshire terrier, etc.

As used herein, the terms **"early aged", "puppy"** or **"puppies"** refer to dogs at an early stage of their development, especially to dogs from the birth to beginning of the adulthood, such as typically from birth to about 8 to 24 months old, depending on the breed and expected adult weight. In some preferred embodiments, a puppy can be less than about 6 months old.

As used herein, the terms **"advanced age", "aged", "aged canine"** and **"aged canine animals"** may be used interchangeably herein and mean a canine animal which has exceeded 70 % of the average lifespan for its particular species and/or breed within a species. For example, if the average lifespan for a given breed of dogs is 10 years, then a dog within that breed greater than **7 years** would be considered as "aged" for purposes herein.

As used herein, unless specifically provided otherwise, the term "% **by weight"** or "% **in weight"** or **"wt** %" or **"by weight"** means the quantity by weight of a constituent/component/ingredient in a food composition as a percentage of the total weight of the food composition on a dry matter basis. More specifically, as used herein, unless specifically provided otherwise, the term "% by weight" or "% in weight" or "wt %" or "by weight" means the content in % of a constituent/component/ingredient relative to the total weight of the chew, on a dry matter basis.

As used herein, **"administration",** and **"administering"** refer to the manner in which a composition is presented to a subject. Most preferably herein, administration of a food composition can be accomplished by an oral method.

As used herein, **"oral administration"** refers to a route of administration that can be achieved notably by swallowing or sucking a food composition.

As used herein, a **"food composition"** refers to any molecules or substances, or combinations of blends thereof, that can be added to food products, including beverages, to prevent undesirable chemical changes. Food compositions disclosed herein can be dry or wet food. In particular, animal food products food compositions can be dry animal food products or dry food compositions.

As used herein, the term **"animal chew"** or **"edible animal chew"** may be considered to be any snack and/or treat for an animal. It should be noted that an animal "chew" is quite distinct from an animal food or pet food. An animal chew differs from an animal food in at least the size of the pieces, the time taken for the animal to consume each piece, in the number of pieces per serving and/or in nutritional content.

As used herein, **"lasting time"** refers to the amount of time taken for an animal to consume the edible animal chew, in particular a dog. According to the present disclosure, it is found that the tensile toughness of an edible animal chew is strongly correlated with the lasting time per gram in feeding tests for canine. By the expression **"long-lasting time",** it is to be understood an amount of time for an animal to consume the edible chaw of at least about 6 minutes; preferably at least about 8 minutes, most preferably at least about 10 minutes, and still more preferably at least about 14 minutes.

As used herein, **« tensile toughness** » may be assessed using textural profile analysis (TPA). The greater the tensile toughness is, the longer lasting the edible animal chew is. Tensile toughness may be expressed in MPa, and measured according to the « Texture Analyser General Method » disclosed in WO2020/035677 and WO2021/161017**,** as described hereafter:
(i) An extruded strip is cut into a tensile bar using an ISO-527-2 stamp (Zwick Roell).
(ii) The tensile bar is placed into the lower grips of a tensile rig, so that the full shoulder of the test piece is exposed, and tightened enough such that the product does not slip during testing, but not so that the product breaks.
(iii) The upper grips of the tensile rig are positioned to align with the test piece, again, so that the full shoulder of the test piece is exposed.
(iv) Tension or slack in the test-piece is minimised.
(v) The grips are moved apart by a texture analyser (TA) at 1 mm/s and the resistive force is recorded by the sensor through the breaking point of the test piece

Before testing, the extruded samples are incubated at 22 °C for 1 hour prior.

The samples are then laid flat in the centre of the flat surface such that the sample is compressed in the longitudinal direction. Using a texture analyser (Stable Micro Systems TA HD plus) a compression plate of a size sufficient to compress the entire surface of the sample is used to compress the product to 50% strain, or 50% of its overall height at a speed of 1 mm/s.

In the case of a sample with a 10 mm height, the distance to 50% strain is 5 mm.

Once the required strain distance is reached, the probe is moved upwards at a rate of 1 mm/s and stops 10 mm above the base plate, the original sample height.

After completing the first compression cycle, the compression plate pauses for a period of 5 seconds in which the product, dependent on its material properties, can recover some of its original shape and form.

The second compression cycle is then carried out. The compression plate is moved down to the distance that was required to achieve 50% strain during the first compression (for the 10 mm height sample, 5mm) at a speed of 1 mm/s.

After reaching the required strain distance, the probe is then moved upwards immediately at a rate of 1 mm/s and stops at the original probe height.

Accordingly, tensile toughness (Mpa) is the area under the curve and provides a compound measure taking into account both the tensile strength and the ductility.

As used herein, the term **"protein source"** can encompass **"animal protein sources", "plant protein sources",** or any other amino acid source, or combinations thereof. According to some embodiments, the protein source can include or can consist of hydrolyzed proteins; e.g. partially or totally hydrolyzed proteins. Methods to hydrolyze, partially or totally proteins are well-known. A hydrolysate can be produced by any known chemical or enzymatic method, such as, in non-limiting example, methods disclosed in US 5,589,357, US 4,879,131, US 5,039,532 or EP 1 236 405 B1, incorporated herein by reference. According to some embodiments, the protein source is not hydrolyzed.

As used herein, **"collagen"** is a protein which in its natural state comprises aggregates (fibrils) of tropocollagen. Tropocollagen molecule comprises a triple helix of protein chains (polypeptide strands). Collagen is the main structural protein found in connective tissues of animals. "Collagen" as described herein includes native collagen and/or chemically modified collagen.

As used herein, the term **"fat"** refers to the total amount of digestible, partially digestible and nondigestible fats or oils that are present in the embodiments of the present disclosure. As used herein, the terms **"lipid", "fat"** and **"oil"** are synonymous.

### EXAMPLE 1 - Testing protocol

The objective of the study was to assess the effect of post-learning chewing on memory consolidation in dogs.

### Methods

### Dogs

35 dogs (11 Australian Shepherds, 14 Border Collies, 20 German Shepherds) completed the study. An additional 11 dogs started the study, but were removed (for removal criteria see below).

Dogs were breeder-owned and lived in 2 different kennels in pairs or groups, with daily access to outdoor areas. All dogs were fed Royal Canin dry food (RC Medium or Maxi Adult, depending breed and size) to maintain their body condition.

### General approach to study

Training and testing occurred over 2 consecutive days. On day 1, in a familiar room, the dog was trained to discriminate between two objects, one of which was associated to a food reward, until a pre-defined learning criterion (see below) was reached. The dog then was brought into their familiar kennel, where they received a chew, either whole, to encourage chewing behavior, or turned into a paste, thereby minimizing the chewing and controlling for nutrient intake. The dog stayed in the kennel for a minimum of 3 h, while being video recorded. The rest of the day dogs followed their standard routine in the kennel. After 24 hours, the dog was trained again in the same learning paradigm, until the pre-defined criterion was reached.

Learning performance was compared between groups, as was relationship between chewing duration and learning performance.

### Learning paradigm

The learning paradigm was adapted from (Affenzeller et al., 2017). Dogs were trained to discriminate between two containers of different colors and shapes, which were placed on a mat of the same color as the container, and of which one was consistently associated with food. Containers were placed 2 m apart.

One trial consisted out of the following steps.
- The dog was lured in a position that did not allow the dog to observe the placement of the containers.
- The containers were positioned and baited with food.
- The dog was guided into the starting position in equal distance from the two containers. The dog could then approach the containers.
- If the dog approached the correct container, the dog was rewarded with the piece of food in the container.
- If the dog approached the incorrect container, the dog did not receive a food reward and both containers were removed by the experimenter.

Location of containers was pseudo-randomly switched between trials, so that the same container was not in the same location more than two trials in a row.

Both containers contained food in a false bottom, to control for odor cues.

In the first two trials of the discrimination task, the piece of food was visibly placed inside the "correct" object, to encourage dogs to approach the container.

Two experimenters conducted the testing. Experimenter 1 lured the dog behind the visual barrier and released the dog to approach the containers. Experimenter 2 positioned the containers and baited them with food. Before the dog was released to make a choice, experimenter 2 positioned themself between the containers, with the back to the dog, to prevent visual cues being given that could influence the choice.

The dog was considered to have made a choice when 2 paws were placed on the mat underneath the object.

No-choice was defined as the dog not placing its paws on either mat within a 30-second period from when released.

In case of incorrect choice or no-choice, the same trial was repeated up to three times until the dog made a correct choice. After three consecutive incorrect or no-choices, experimenter 1 guided the dog to the correct container, and the dog ate a piece of food from the container. The repeated trials were not considered for the result analysis.

Trials were grouped into sessions of 10 trials, excluding repeats due to incorrect or no-choice trials.

Learning criterion was defined as: The dog made 80% or more correct choices in two consecutive sessions. Dogs that did not reach learning criterion after 8 sessions were excluded from the study.

### Pre-training

Before dogs could participate in the learning paradigm, they were first trained to approach a container (different in shape and colour from the ones used for testing) with a piece of food. In the first two trials, a piece of food was visibly placed in the container, to motivate the dogs to approach it. After the first two trials, the baiting was not visible to the dog. This procedure was repeated until the dog approached the container (i.e., the dog had at least two paws within 0.5 m from the container) and ate the piece of food in 4 out of 5 consecutive trials. The container was placed in alternating order on either of the two spots, where the containers to be used later for the discriminated task would be placed.

### Post-learning nutritional intervention

After the learning task was completed, the dogs were taken back to their kennel and received a collagen-based chew [Pedigree Good Chew^{®}, Mars Inc, composition: cereals, meat and animal derivatives (including 2.4% dried beef liver powder equivalent to 4% beef), derivatives of vegetable origin, minerals, vegetable protein extracts, oils and fats], adapted to their size (88 g for dogs up to 25 kg, 140 g for dogs heavier than 25 kg).

Dogs in the control group received the chew blended with 100 g of wet food (Royal Canin Medium Adult, Royal Canin), to provide a paste which could be consumed quickly, followed by 40 g of the same wet food. Dogs in the treatment group received the chew whole, together with 140 g of wet food (Royal Canin Medium Adult^{®}).

### Removal criteria and balancing criteria

Dogs were removed, if they failed to reach learning criterion within 80 sessions (n=5), if they exhibited a strong object preference and learned the task in 2 sessions (n=2) or if they failed to consume at least 75% of the chew within 60 minutes (n=4).

Groups were balanced for kennel, breed, age, sex and previous training experience as reported by the owner, as well as number of sessions needed to reach learning criterion on day 1.

### Statistical analysis

Statistical analyses were carried out using the R statistical environment (v. 4.2.0, R Core Team, 2022). Number of sessions to reach learning criterion was first analysed in cumulative link mixed models (R package "ordinal"; Christensen, 2019). Since, however, these mixed models, in which both days were included, did not yield reliable results due to low variance explained by the random term (dog ID), we analysed data from the two days in separate cumulative link models (CLMs). The full CLM models of maximum session number included kennel (factor with two levels: kennel A or Kennel B), container (factor with four levels: white, green, blue or yellow), and experimental group (factor with two levels: control or treated). We also repeated the analysis by focusing on the duration of oral activity instead of the dichotomous effect of experimental treatment.

Duration of oral activity was determined via continuous analysis of video recordings. Oral activity was defined as licking, chewing, swallowing
Final models were reached by stepwise model selection, and the effects of explanatory variables were analysed by likelihood ratio tests (LRTs). χ² and p-values of LRTs of models with and without the explanatory variable are provided. In addition, odds ratios (exp[β]) with 95% confidence intervals are provided between levels of a given significant fixed effect.

### Results

### Duration of oral activity per treatment group

Mean duration of oral activity was significantly longer in the treatment group (13.9 ± 1.3 min) than in the control group (1.9 ± 0.2 min, t = -7.892, df = 19.926, p-value < 0.0001).

### Sessions required to reach learning criterion

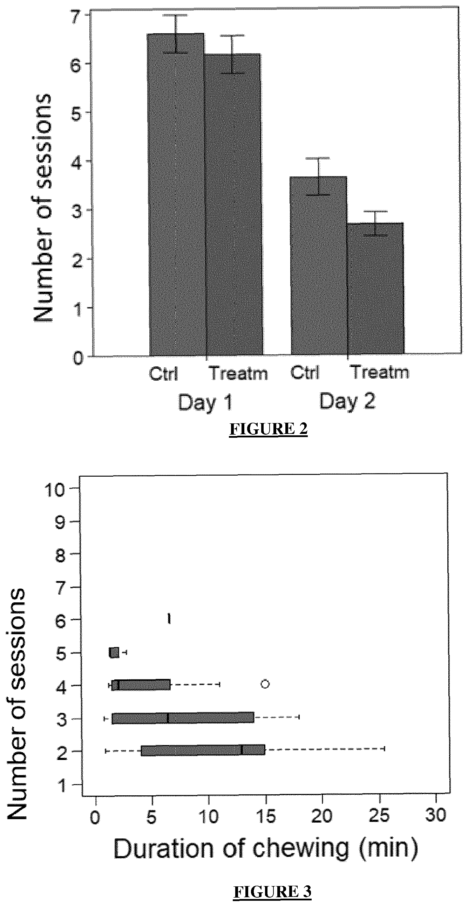

On day 1, we did not find significant differences in the number of number of sessions to reach learning criterion in dogs in the control and treatment group (Control: 6.5 ± 0.4, treatment 6.2 ± 0. 4, CLM of session number, LRT of treatment group: χ² = 0.675; df = 1; p = 0.411 (Fig. 3)). On day 2, dogs in the treatment group needed significantly less sessions to reach learning criterion (Control: 3.4 ± 0.3, treatment 2.7 ± 0.2, CLM of maximum session number, LRT of treatment group: χ² = 5.027; df = 1; p = 0.025, control → Treatment: exp(β) = 0.240 [0.067; 0.863], Fig. 3).

### Relationship between oral activity and sessions needed to reach learning criterion

We analysed the performance of the dogs in relation to the duration of oral activity across both groups.

Dogs that engaged for longer in oral activity on day 1 needed less sessions to reach learning criterion on day 2 (LRT of duration of chewing: χ² = 8.219; df = 1; p = 0.004, (exp(β) = 0.874 [0.791; 0.967]).

As expected, we did not find any significant relationship on day 1 between number of sessions to reach learning criterion and oral activity post-training (LRT of duration of chewing: χ² = 0.222; df = 1; p = 0.637).

### Discussion

The study successfully assessed whether post-learning chewing affects memory consolidation in dogs. The performance of the dogs did not differ between groups on day 1 - i.e. before they received the chew or control, suggesting a non-biased allocation of subjects to groups. Significantly fewer sessions were needed to reach the pre-determined criterion on day 2 in the dogs that received the treatment as opposed to dogs in the control group.

The analysis on the relationship between chewing duration and dogs' performance, irrespective of allocation of the subjects to experimental group or control, showed results that are consistent with the analysis comparing experimental groups: the longer the dogs chewed, the fewer sessions they needed to reach criterion on day 2.

This implies that the results are robust enough to show an effect of chewing after a learning event on memory consolidation. Dogs in the experimental group chewed on average for 13,9 minutes. This suggests that such a duration of chewing immediately after a learning event is enough to enhance memory consolidation.

## Claims

1. A non-therapeutic method for improving memory consolidation in a canine, comprising the step of administering an edible animal chew to the canine; said edible animal chew being **characterized by** a long-lasting duration time of at least about 6 minutes; preferably at least about 8 minutes, most preferably at least about 10 minutes, and still most preferably at least about 14 minutes.

2. The method according to claim 1, wherein the edible animal chew is **characterized by** a tensile toughness of at least about 20 Mpa; preferably at least about 50 MPa, most preferably at least about 80 MPa.

3. The method according to claim 1 or 2, wherein the edible animal chew is **characterized in that** it comprises at least about 10 wt % of starch; preferably at least about 20 wt %, most preferably at least about 50 wt %.

4. The method according to any of the preceding claims, wherein the edible animal chew is **characterized in that** it comprises at least about 3 wt % of protein.

5. The method according to claim 4, wherein from about 3 wt % to about 85 wt % of protein is collagen.

6. The method according to any of the preceding claims, wherein the edible animal chew is **characterized in that** it comprises less than about 20 wt %; preferably less than about 10 wt % of animal fat.

7. The method according to any of the preceding claims, wherein the edible animal chew is **characterized in that** it comprises less than about 40 wt %, preferably less than about 25%, of water.

8. The method according to any of the preceding claims, wherein the edible chew is **characterized in that** it is an aerated chew.

9. The method according to claim 8, wherein the aerated edible chew is **characterized by** a density from about 0.4 g/cm³ to about 1.2 g/cm³.

10. The method according to any of the preceding claims, wherein the edible animal chew is **characterized in that** it has an elongated shape.

11. The method according to any of the preceding claims, wherein the canine is a dog; in particular a domestic dog.

12. The method according to any of the preceding claims, **characterized in that** it is for improving, post-training, the memory consolidation in a canine.

13. The method according to any of the preceding claims, comprising the following steps:
a) submitting the canine to a training session; and then
b) administering the edible animal chew to the canine.

14. An edible animal chew, for use in a method for improving memory consolidation in a canine; said edible animal chew being **characterized by** a long-lasting duration time of at least about 6 minutes; preferably at least about 8 minutes, and more preferably at least about 10 minutes, and still more preferably at least about 14 minutes.

15. The edible chew for use according to claim 14, said edible chew being **characterized by** a tensile toughness of at least about 20 Mpa; preferably at least about 50 MPa, most preferably at least about 80 MPa.
